# EUROPÄISCHE PATENTSCHRIFT

(11) **EP 0 682 464 B1**
(45) Veröffentlichungstag und Bekanntmachung des Hinweises auf die Patenterteilung: **28.07.1999**
(21) Anmeldenummer: 95106673.7
(22) Anmeldetag: 03.05.1995
(51) Int. Cl.: H05B 39/04, H05B 41/29, H02M 7/5383

(54) **Schaltungsanordnung zum Betreiben elektrischer Lampen**
Circuit for operating electric lamps
Circuit pour alimenter des lampes électriques

(30) Priorität: 09.05.1994 DE 4416401
(43) Veröffentlichungstag der Anmeldung: 15.11.1995
(73) Patentinhaber: Patent-Treuhand-Gesellschaft für elektrische Glühlampen mbH, 81543 München (DE)
(72) Erfinder: Lecheler, Reinhard, D-86633 Neuburg an der Donau (DE)

(56) Entgegenhaltungen:
- EP-A- 0 466 031
- US-A- 5 111 114

## Beschreibung

Die Erfindung betrifft eine Schaltungsanordnung zum Betreiben elektrischer Lampen gemäß dem Oberbegriff des Anspruchs 1.

Diese Art von Schaltungsanordnungen werden insbesondere zum Betreiben von Niedervolt-Halogenglühlampen einerseits und Entladungslampen, beispielsweise Leuchtstofflampen, andererseits verwendet. Hauptbestandteil ist ein selbsterregter stromrückgekoppelter Wechselrichter, beispielsweise in Halb- oder Vollbrückenschaltung, der die niederfrequente Netzspannung in eine hochfrequente Spannung zerhackt. Diese wird mit einem auf den Lampentyp abgestimmten Ankoppelschaltkreis an die elektrischen Erfordernisse der zu betreibenden Lampe(n) angepaßt. Zum Betreiben von Niedervolt-Halogenglühlampen besteht der Ankoppelschaltkreis im wesentlichen aus einem Leistungsübertrager, der die hochfrequente Spannung auf die Niederspannung der zu verwendenden Halogenglühlampen transformiert, z.B. 6, 12 oder 24 V. Solche Schaltungsanordnungen werden deshalb auch als elektronische Konverter bezeichnet. Ihre detaillierte Funktionsweise ist beispielsweise in der EP-PS 264 765 und der DE-OS 40 11 742 offenbart. Zum Betreiben von Entladungslampen, beispielsweise Leuchtstofflampen, folgt den Brückentransistoren eine Vorschaltinduktivität, die den Lampenstrom begrenzt. Zur Zündung der Entladung kann der Ankoppelschaltkreis noch einen parallel zu den Elektroden der Entladungslampe geschalteten Kondensator beinhalten, der in Resonanz mit der Vorschaltinduktivität betrieben wird. Die Funktionsweise solcher elektronischer Vorschaltgeräte ist beispielsweise in der DE-PS 29 41 822 und der DE-OS 38 05 510 näher erläutert.

In beiden Fällen wird der Wechselrichter durch einen rückgekoppelten Anteil des Ausgangsstromes gesteuert. Dadurch ist nach Ausschalten der Netzspannung für eine erneute Inbetriebnahme ein Steuerimpuls erforderlich, um die HF-Schwingung des Wechselrichters zu initiieren. Gewöhnlich enthalten elektronische Konverter bzw. Vorschaltgeräte einen Start- oder Triggergenerator, der diese Aufgabe übernimmt.

Im einfachsten Fall besteht der Triggergenerator aus einem Ladekondensator, dessen Ladespannung bei Überschreiten eines Schwellwertes ein spannungsabhängiges Schaltelement, beispielsweise einen Diac, durchschaltet und damit die hochfrequente Schwingung des Wechselrichters initiiert. Während des Betriebs des Wechselrichters muß hiergegen die Erzeugung eines die hochfrequente Schwingung störenden Triggersignals durch das spannungsabhängige Schaltelement verhindert werden. Wie z.B. aus "Elektronikschaltungen", Siemens AG, 1982, S. 148 von W. Hirschmann bekannt ist, geschieht dies im einfachsten Fall über eine Entladediode, die in Kombination mit einer geeignet gewählten Zeitkonstante des Ladekondensators verhindert, daß sich der Ladekondensator auf die Zündspannung des Diacs aufladen kann während der Wechselrichter schwingt.

Nachteilig bei dieser Schaltung ist, daß die Sperrspannung der Entladediode größer sein muß als der Spitzenwert der maximal auftretenden gleichgerichteten Versorgungsspannung. Typische Werte liegen im Bereich zwischen ca. 300V_{S} und 400V_{S}. Dies erfordert große Leitungsabstände zur Vermeidung von Spannungsüberschlägen und erschwert daher eine weitere Integration dieser Art von Schaltungen. Ein weiterer Nachteil herkömmlicher Konverter ist, daß bei bestimmten Betriebsbedingungen das Ladeverhalten des Ladekondensators durch die Entladediode unerwiinscht beeinflußt werden kann. Insbesondere in Kombination mit externen Dimmgeräten können dann bei den angeschlossenen Lampen Flackererscheinungen auftreten.

Aufgabe der Erfindung ist es, diesen Nachteil zu vermeiden und eine Schaltungsanordnung anzugeben, die sich mit möglichst wenigen Bauteilen in Niederspannungstechnik und dadurch kostengünstig realisieren und optional auch schaltungstechnisch integrieren läßt.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Der Grundgedanke der Erfindung besteht darin, dem Ladekondensator des Triggergenerators einen im Ruhezustand hochohmigen steuerbaren Entladewiderstand parallel zu schalten. Dabei erfolgt die Ansteuerung durch die HF-Schwingung des Wechselrichters, indem beispielsweise dem Steueranschluß des Entladewiderstands ein Steuersignal des Wechselrichters zugeführt wird. Solange ein Spannungssignal anliegt, ist der steuerbare Entladewiderstand niederohmig und entlädt den Ladekondensator. Wird die Schaltung mit der Versorgungsspannung verbunden, so beeinflußt der Entladewiderstand den Ladekondensator zunächst nicht, so daß sich dieser ungehindert aufladen und einen Triggerimpuls für den Start des Wechselrichters auslösen kann. Während der Wechselrichter schwiiigt, wechselt der Entladewiderstand hingegen periodisch zwischen hochohmigem und niederohmigem Zustand. Dadurch wird der Ladekondensator des Triggergenerators im wesentlichen synchron zur HF-Schwingung abwechselnd ge- bzw. entladen. Die Ladezeitkonstante des Ladekondensators wird dabei gezielt so gewählt, daß sich der Ladekondensator während der halben Schwingungsdauer des Wechselrichters nicht bis zur Zündspannung des spannungsabhängigen Schaltelements des Triggergenerators aufladen kann. Auf diese Weise wird eine unerwünschte Erzeugung eines Triggerimpulses während des Schwingens des Wechselrichters verhindert. Während der Ruhephase des Wechselrichters - beispielsweise nach einer ggf. auch nur vorübergehenden Unterbrechung der Netzspannung - kann sich der Ladekondensator hingegen wieder bis zur Zündspannung aufladen, das spannungsabhängige Schaltelement des Triggergenerators durchschalten und somit einen Triggerimpuls zum Wiederanschwingen des Wechselrichters erzeugen.

Vorteilhaft wird dies dadurch erreicht, daß der Steueranschluß des steuerbaren Entladewiderstands - eventuell iiber einen Vorwiderstand zur Beeinflussung des Steuerverhaltens - mit dem Steuersignal eines Brückentransistors des Wechselrichters verbunden ist. Im Falle eines freischwingenden stromrückgekoppelten Halbbrückenwandlers wird dafür beispielsweise das Spannungssignal einer der zwei Sekundärwicklungen des Steuerübertragers verwendet. Dieses Spannungssignal steuert dann den einen der zwei Halbbrückentransistoren und den steuerbaren Entladewiderstand im wesentlichen synchron an. Auf diese Weise wird zuverlässig verhindert, daß dem Steuersignal des Brückentransistors ein unerwünschtes Triggersignal überlagert wird.

Geeignete Bauelemente für den steuerbaren Entladewiderstand sind steuerbare Halbleiter, beispielsweise Transistoren, sowohl bipolare als auch Feldeffekt- (FET) Typen. Im Falle eines bipolaren Transistors wird dessen Basisanschluß und bei einem FET dessen Gateanschluß - eventuell über einen Vorwiderstand - ein Steuersignal aus dem Ansteuerübertrager des Wechselrichters zugeführt.

Durch die erfindungsgemäße Schaltungsanordnung liegt am steuerbaren Entladewiderstand maximal in etwa die Zündspannung des spannungsabhängigen Schaltelements an - bei Verwendung eines Diacs sind das typisch ca. 30 V - 35 V. Dies eröffnet die Möglichkeit, die Triggerschaltung auch komplett als integrierten Schaltkreis auszuführen und damit die räumlichen Abmessungen elektronischer Konverter oder Vorschaltgeräte weiter zu reduzieren.

Die Erfindung wird anhand der nachfolgenden Ausführungsbeispiele näher erläutert. Es zeigen
- Figur 1: ein Prinzipschaltbild eines erfindungsgemäßen elektronischen Konverters für Niedervolt-Halogenglühlampen
- Figur 2: ein Prinzipschaltbild eines erfindungsgemäßen elektronischen Vorschaltgeräts für Leuchtstofflampen.

Figur zeigt das Prinzipschaltbild eines elektronischen Konverters für Niedervolt-Halogenglühlampen. Es beinhaltet die Funktionsblöcke Funkentstörung FE, Gleichrichter GR, selbsterregter stromrückgekoppelter Halbbrückenwandler - er besteht aus den beiden Halbbrückentransistoren T1,T2, den beiden Halbbrückenkondensatoren C2,C3, dem Steuertransformator RKA-RKC für die Stromrückkopplung sowie dem Leistungsübertrager TR - an seiner Sekundärwicklung wird eine 12 V Halogenglühlampe HG betrieben - und einen Triggergenerator, bestehend aus dem Widerstand R1, dem Ladekondensator C1 und dem Diac DC1. Der steuerbare Entladewiderstand ist hier durch einen NPN-Transistor realisiert. Der NPN-Transistor T3 und der Vorwiderstand R2 verhindern die Entstehung von Triggerimpulsen während die Halbbrücke schwingt.

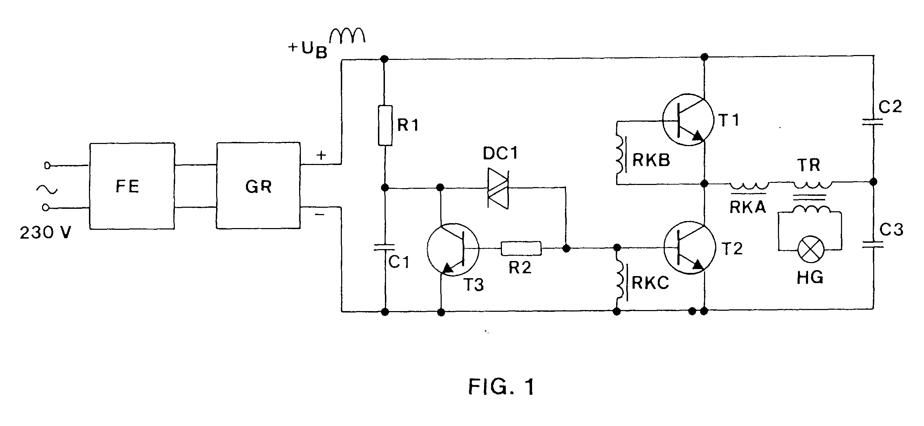

Im folgenden wird die Funktionsweise der in Figur 1 gezeigten Schaltungsanordnung näher erläutert. Die Funkentstörung FE schützt in an sich bekannter Weise das Netz vor hochfrequenten Störsignalen des Halbbrückenwandlers und besteht beispielsweise atis einer Entstördrossel und einem oder mehreren Kondensatoren (siehe z.B. H.-J.Meyer, "Stromversorgungen für die Praxis", Vogel Buchverlag, Würzburg, 1989, S. 115-116). Der Gleichrichter GR besteht aus einer Diodenvollbrücke (siehe z.B. W. Hirschmann und A. Hauenstein, ,,Schaltnetzteile", Siemens AG, 1990, S. 102) und wandelt die Wechselspannung des Netzes in eine pulsierende Gleichspannung +*U*_{*B*}*.* Der negative Pol des Gleichrichters ist im folgenden das Bezugspotential. Die beiden Brückentransistoren T1,T2 werden abwechselnd durch die Spannungssignale der beiden Sekundärwicklungen RKB bzw. RKC des Steuerübertragers RKA-RKC durchgeschaltet. Sie schließen damit den Stromkreis über die Primärwicklungen von Steuerübertrager RKA-RKC und Leistungsübertrager TR, sowie über die beiden Brückenkondensatoren C2 bzw. C3. Die Sekundärwicklung des Leistungsübertragers TR ist mit einer 12 V Halogenglühlampe verbunden. Der Ladekondensator C1 des Triggergenerators wird über den seriellen Widerstand R1 aufgeladen. Parallel zu C1 ist die Kollektor-Emitter-Strecke des Entladetransistors T3 geschaltet. Diese wird - bis auf eine eventuelle geringe Phasenverschiebung durch unterschiedliche Schaltzeiten der Transistoren T2 und T3 - synchron zur Kollektor-Emitter-Strecke des Brückentransistors T2 durchgeschaltet, d.h. niederohmig, so daß sich der Ladekondensator C1 über die Kollektor-Emitter-Strecke des Entladetransistors T3 entladen kann. Zur Synchronisierung sind beide Basisanschlüsse über den Vorwiderstand R2 miteinander verbunden, so daß sowohl der Brückentransistor T2 als auch der Entladetransistor T3 durch die Steuerspannung der Sekundärwicklung RKC des Steuerübertragers RKA-RKC angesteuert werden. Dadurch wird auf einfache Weise zuverlässig verhindert, daß der Steuerspannung für den Brückentransistor T2 ein unerwünschter Triggerimpuls überlagert wird. Der Widerstand R2 dient zum einen dem Schutz des Transistors T3 vor Überlastung. Zum anderen wird durch seine Dimensionierung der Entladestrom des Ladekondensators C1 gezielt so begrenzt, daß eine ausreichende initiale Triggerung des Halbbrückenwandlers gewährleistet ist. Andernfalls könnte der Triggerimpuls eine ungeeignete Form aufweisen aufgrund einer zu raschen Entladung des Ladekondensators C1 iiber den Entladetransistor T3. Die Zeitkonstante τ = R1·C1ist so gewählt, daß sich C1 während der Leitendphase des Brückentransistors T1 nicht auf die Zündspannung des Diacs DC1 aufladen und einen unerwünschten Triggerimpuls erzeugen kann. Andernfalls wiirde nämlich der Brückentransistor T2 ebenfalls durchschalten (Gleichtaktbetrieb) und infolge hoher Querströme beide Brückentransistoren T1 und T2 zerstören. Wie gewünscht, wird vielmehr auf diese Weise ein Triggersignal nur dann erzeugt, wenn die HF-Schwingung der Halbbrücke abbricht, beispielsweise durch - ggf. auch nur vorübergehendes - Abschalten der Netzspannung. Eine Beeinflussung des Ladekondensators durch den Lastkreis findet nicht statt. In der Tabelle ist eine Bauteileliste für ein konkretes Ausführungsbeispiel angegeben.

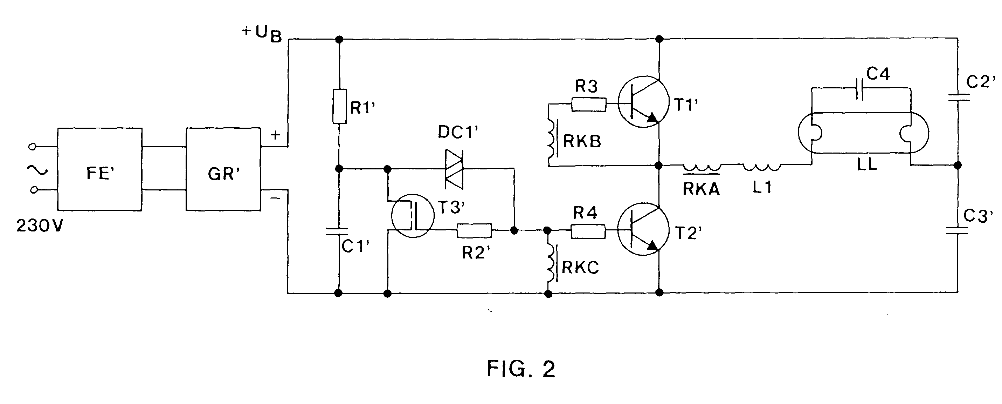

Figur 2 zeigt ein Prinzipschaltbild eines erfindungsgemäßen elektronischen Vorschaltgeräts für Leuchtstofflampen. Die Filterschaltung FE' entspricht im Prinzip der in Figur 1 beschriebenen Filterschaltung FE. Der Gleichrichter GR' enthält neben einer Diodenvollbrücke einen Glättungskondensator. Letzterer begrenzt den Modulationsgrad der gleichgerichteten Versorgungsspannung (Modulationsfrequenz 100 Hz) auf einen Wert, der keine störende Modulation der Lichtstärke der Leuchtstofflampe LL verursacht. Der Wechselrichter - er besteht aus einer stromrückgekoppelten Halbbrücke mit den beiden Brückenkondensatoren T1' und T2', den beiden Brückenkondensatoren C2' und C3' und dem Steuerübertrager RKA'-RKC' - sowie der Triggergenerator, bestehend aus R1', C1' und DC1' entsprechen in ihren prinzipiellen Funktionsweisen den bereits in Figur 1 beschriebenen. Die beiden Sekundärwicklungen RKB',RKC' des Steuerübertragers RKA'-RKC' sind über die Vorwiderstände R3 und R4 mit den Basisanschlüssen der beiden Brückentransistoren T1' bzw. T2' verbunden. Der steuerbare Entladewiderstand ist hier durch den FET T3' realisiert. Es handelt sich hierbei um einen selbstsperrenden n-Kanal MOS-FET vom Anreicherungstyp. Er ist entsprechend dem NPN-Transistor T3 in Figur 1 geschaltet und wird ebenfalls im wesentlichen synchron zum Brückentransistor T2' durch das Steuersignal der Sekundärwicklung RKC' des Steuerübertragers RKA'-RKC' über den Vorwiderstand R2' angesteuert. Die Induktivität L1 stabilisiert den Strom der Leuchtstofflampe LL. Sie bildet mit der Kapazität C4 einen Resonanzkreis. Seine Dimensionierung ist so gewählt, daß er während der Zündphase eine hohe Güte aufweist und seine Resonanzfrequenz in der Nähe der Betriebsfrequenz des Wechselrichters liegt. Dadurch werden die zum Zünden der Leuchtstofflampe LL notwendigen hohen Zündspannungen erreicht.

Die Erfindung ist nicht durch die angegebenen Ausführungsformen beschränkt. Insbesondere kann der steuerbare Entladewiderstand auch durch andere Bauteile realisiert werden, beispielsweise p-Kanal MOS-FET's o.ä.

**Tabelle:**

| Bauteileliste für ein Ausführungsbeispiel gemäß der Prinzipschaltung aus Figur 1. | |
|---|---|
| R1 | 270 kΩ |
| R2 | 1 kΩ |
| C1 | 8,2 nF; 100 V |
| C2, C3 | 15 nF; 400 V |
| DC1 | Diac 33V |
| RKA-RKC | R 10/6/4 5/5/1 Wdgen. |
| TR | EF 25/7,5 Wdgen. |
| T1, T2 | BUL381D |
| T3 | BC850C |
| HG | Halogenglühlampe 12V, 24W |

## Patentansprüche

1. Schaltungsanordnung zum Betreiben elektrischer Lampen bestehend aus
- einer Gleichrichterschaltung (GR, GR') und optional einer Filterschaltung (FE, FE')
- einem selbstschwingenden stromrückgekoppelten Wechselrichter in Halboder Vollbrückenschaltung
- einem Triggergenerator, der mindestens aus einer Reihenschaltung eines Ladekondensators (C1, C1') und eines Widerstandes (R1, R1') besteht, sowie ein spannungsabhängiges Schaltelement (DC1, DC1') beinhaltet, welches mit einem Verbindungspunkt zwischen Ladekondensator (C1, C1') und Widerstand (R1, R1') einerseits und dem Wechselrichter andererseits verbunden ist, wobei das spannungsabhängige Schaltelement (DC1, DC1') durchschaltet und dabei die Schwingung des Wechselrichters startet, sobald das Potential des Verbindungspunktes einen Schwellenwert überschreitet,
- einem Ankoppelkreis, der die hochfrequente Spannung des Wechselrichters an die zu betreibende(n) elektrische(n) Lampe(n) anpaßt
dadurch gekennzeichnet, daß ein steuerbarer Entladewiderstand (T3, T3') parallel zum Ladekondensator (C1, C1') geschaltet ist, wobei der Steueranschluß des Entladewiderstands (T3, T3') mit einem Steuersignal des Wechselrichters verbunden ist.

2. Schaltungsanordnung nach Anspruch 1, dadurch gekennzeichnet, daß der steuerbare Entladewiderstand als Transistor (T3, T3') realisiert ist.

3. Schaltungsanordnung nach Anspruch 2, dadurch gekennzeichnet, daß der Transistor als bipolarer Transistor (T3) realisiert ist, dessen Basis - eventuell über einen zusätzlichen Vorwiderstand (R2) - mit der Basisbeschaltung desjenigen Brückentransistors (T2) verbunden ist, der mit dem spannungsabhängigen Schaltelement (DC1) verschaltet ist.

4. Schaltungsanordnung nach Anspruch 2, dadurch gekennzeichnet, daß der Transistor als Feldeffekttransistor (T3') realisiert ist, dessen Gate - eventuell über einen zusätzlichen Vorwiderstand - mit der Basisbeschaltung desjenigen Brückentransistors (T2') verbunden ist, der mit dem spannungsabhängigen Schaltelement (DC1') verschaltet ist.

5. Schaltungsanordnung nach Anspruch 1, dadurch gekennzeichnet, daß das spannungsabhängige Schaltelement als Diac (DC1,DC1') realisiert ist.

## Claims

1. Circuit arrangement for operating electric lamps, comprising
- a rectifier circuit (GR, GR') and, optionally, a filter circuit (FE, FE'),
- a self-oscillating inverter, with current feedback, in a half-bridge or full-bridge circuit,
- a trigger generator which comprises at least a series circuit of a charging capacitor (C1, C1') and a resistor (R1, R1'), and also contains a voltage-dependent switching element (DC1, DC1') which is connected, on the one hand, to a tie point between the charging capacitor (C1, C1') and resistor (R1, R1' ) and, on the other hand, to the inverter, the voltage-dependent switching element (DC1, DC1') switching through, and starting the oscillation of the inverter in the process, as soon as the potential of the tie point exceeds a threshold value, and
- a coupling circuit which matches the radiofrequency voltage of the inverter to the electric lamp(s) to be operated,
characterized in that a controllable discharging resistor (T3, T3') is connected in parallel with the charging capacitor (C1, C1'), the control terminal of the discharging resistor (T3, T3') being connected to a control signal of the inverter.

2. Circuit arrangement according to Claim 1, characterized in that the controllable discharging resistor is realized as a transistor (T3, T3').

3. Circuit arrangement according to Claim 2, characterized in that the transistor is realized as a bipolar transistor (T3) whose base - possibly via an additional series resistor (R2) - is connected to the base circuit of that bridge transistor (T2) which is connected to the voltage-dependent switching element (DC1).

4. Circuit arrangement according to Claim 2, characterized in that the transistor is realized as a field effect transistor (T3') whose gate - possibly via an additional series resistor - is connected to the base circuit of that bridge transistor (T2') which is connected to the voltage-dependent switching element (DC1').

5. Circuit arrangement according to Claim 1, characterized in that the voltage-dependent switching element is realized as a diac (DC1, DC1').

## Revendications

1. Montage pour faire fonctionner des lampes électriques, constitué
- d'un circuit (GR, GR') redresseur et, éventuellement, d'un circuit (FE, FE') de filtrage
- d'un onduleur en pont ou en demi-pont autooscillant et monté en réaction
- d'un générateur formant déclencheur, qui est constitué au moins d'un circuit série d'un condensateur (C1,C1') de charge et d'une résistance (R1,R1') et qui comporte un élément (DC1,DC1') de commutation en fonction de la tension, qui est connecté à un point de liaison entre le condensateur (C1,C1') de charge et la résistance (R1,R1') d'une part, et l'onduleur d'autre part, l'élément (DC1,DC1') de commutation en fonction de la tension étant passant et faisant ainsi commencer l'oscillation de l'onduleur, dès que le potentiel du point de liaison dépasse une valeur de seuil,
- un circuit de couplage, qui adapte la tension haute fréquence de l'onduleur à la lampe électrique à faire fonctionner ou aux lampes électriques à faire fonctionner
caractérisé en ce qu'une résistance (T3,T3') de décharge, qui peut être commandée, est montée en parallèle au condensateur (C1,C1') de charge, la borne de commande de la résistance (T3,T3') de décharge étant reliée à un signal de commande de l'onduleur.

2. Montage suivant la revendication 1, caractérisé en ce que la résistance de décharge, qui peut être commandée, est réalisée sous la forme d'un transistor (T3,T3').

3. Montage suivant la revendication 2, caractérisé en ce que le transistor est réalisé sous la forme d'un transistor (T3) bipolaire, dont la base est connectée, éventuellement par l'intermédiaire d'une résistance (R2) supplémentaire de protection, au montage à base du transistor (T2) en pont qui est relié à l'élément (DC1) de commutation en fonction de la tension.

4. Montage suivant la revendication 2, caractérisé en ce que le transistor est réalisé sous la forme d'un transistor (T3') à effet de champ, dont la grille est connectée, éventuellement par l'intermédiaire d'une résistance supplémentaire de protection, au montage à base du transistor (T2') en pont, qui est relié à l'élément (DC1') de commutation en fonction de la tension.

5. Montage suivant la revendication 1, caractérisé en ce que l'élément de commutation en fonction de la tension est réalisé sous la forme d'un diac (DC1,DC1').
